# EUROPEAN PATENT APPLICATION

(11) **EP 4 509 875 A1**
(43) Date of publication of application: **19.02.2025**
(21) Application number: 24180965.6
(22) Date of filing: 10.06.2024
(51) Int. Cl.: G01S 13/87, G01S 13/931

(54) **TARGET DETECTING APPARATUS AND TARGET DETECTING METHOD BASED ON RADAR**

(30) Priority: 17.08.2023 KR 20230107798
(71) Applicant: Hyundai Mobis Co., Ltd., Gangnam-gu Seoul 06141 (KR)
(72) Inventor: SEO, Yu Rim, 16891 Yongin-si (KR)
(74) Representative: Vossius & Partner Patentanwälte Rechtsanwälte mbB

(57) **Abstract**

A target detecting apparatus based on radar includes a radar sensor that radiates radar signals in different directions of a vehicle to detect a target, and a controller that generates an initial track based on target detection information from the radar sensor, and compares first detection sensor information obtained by detecting the initial track and second detection sensor information, in which a location coordinate of the initial track is included in a detection area, to determine whether the initial track is a false target.

## Description

### CROSS-REFERENCE TO RELATED APPLICATION

This application claims the benefit of priority to Korean Patent Application No. 10-2023-0107798, filed in the Korean Intellectual Property Office on August 17, 2023, the entire contents of which are incorporated herein by reference.

### TECHNICAL FIELD

The present disclosure relates to a target detecting apparatus and a target detecting method based on radar.

### BACKGROUND

A radar device is a device that radiates electromagnetic wave signals through a transmitting antenna and receives the signals reflected from a target from a receiving antenna, and then generates detection information, such as a distance, a speed, and an angle of the target by using the received signals.

The radar technology is utilized to detect a target in a driving assisting system of a vehicle, warn an accident risk for detected target in advance, and actively prevent and avoid an accident.

In this vehicle radar environment, a false target may be detected. As an example, a false target may be detected due to continuous reflection from a stationary structure or multiple reflections from a tunnel. Of course, detection information on a false target due to environmental factors may be deleted based on environmental information.

Meanwhile, in some sections at an end of the radar's detection area, it may be difficult to calculate an exact angle due to an angle ambiguity, and an angle fast Fourier transform (FFT) may cause a detection angle to spread in the x axis whereby a false target may be detected as the detection angle is miscalculated as an angle of an opposite sign. However, conventionally, it is not easy to determine a false target due to an error in the detection angle.

In this way, when a false target is detected as an actual target, a wrong warning may occur, and accordingly, a reliability of the driver for the driving assisting system is degraded.

### SUMMARY

The present disclosure has been made to solve the above-mentioned problems occurring in the prior art while advantages achieved by the prior art are maintained intact.

An aspect of the present disclosure provides a target detecting apparatus and a target detecting method based on radar, by which a false target due to a detection angle error in some sections of a radar detection area is determined.

An aspect of the present disclosure also provides a target detecting apparatus and a target detecting method based on radar, by which a wrong warning due to a false target is prevented by deleting the false target in an operation of generating an initial track, and a tracking accuracy of an actual target is improved.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a target detecting apparatus based on radar includes a radar sensor that radiates radar signals in different directions from a vehicle to detect a target, and a controller that generates an initial track based on target detection information from the radar sensor, and compare first detection sensor information obtained by detecting the initial track and second detection sensor information, in which a location coordinate of the initial track is included in a detection area of the radar sensor, to determine whether the initial track is a false target.

In an embodiment, the radar sensor may include a first sensor that irradiates a radar signal toward a front right side of the vehicle to detect the target, a second sensor that radiates a radar signal toward a front left side of the vehicle to detect the target, a third sensor that irradiates a radar signal toward a rear right side of the vehicle to detect the target, and a fourth sensor that irradiates a radar signal toward a rear left side of the vehicle to detect the target.

In an embodiment, the controller may include a signal processor that generates one or more target detection information based on the radar signals of the first to fourth sensors, a track generator that compares a correlation between the one or more target detection information, generate the initial track, and stores the first detection sensor information obtained by detecting the initial track, a track location identifier that identifies a location of the initial track, and store the second detection sensor information, in which the location coordinate of the initial track is included in the detection area, and a false target determiner that determines that the initial track is the false target when the first detection sensor information and the second detection sensor information do not coincide with each other after comparison with each other.

In an embodiment, the controller may set areas corresponding to a specific angle from detection areas of the first to fourth sensors to an outer side as angle folding areas.

In an embodiment, the false target determiner may determine whether the initial track is the false target when the location coordinate of the initial track is included in at least one of the angle folding areas.

In an embodiment, the track generator may generate a confirmed track for the initial track when the location coordinate of the initial track is not included in the angle folding areas.

In an embodiment, the controller may output information on the confirmed track to a warning system in the vehicle when the confirmed track is generated.

In an embodiment, the controller may delete the initial track when it is identified that the initial track is the false target.

In an embodiment, in the first detection sensor information, detection information of the first to fourth sensors on the initial track may be stored as a bit value of 0 or 1, and in the second detection sensor information, information on whether the location coordinate of the initial track may be included in the detection areas of the first to fourth sensors is stored as a bit value of 0 or 1.

According to another aspect of the present disclosure, a target detecting method based on radar includes radiating, by a radar sensor, radar signals in different directions from a radar sensor of a vehicle to detect a target, and generating, by a controller, an initial track based on target detection information from the radar sensor, and comparing, by the controller, first detection sensor information obtained by detecting the initial track and second detection sensor information, in which a location coordinate of the initial track is included a detection area, to determine whether the initial track is a false target.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating a configuration of a target detecting apparatus based on radar according to an embodiment of the present disclosure;
FIGS. 2A and 2B are views illustrating a detailed configuration and a detection area of a radar sensor according to an embodiment of the present disclosure;
FIGS. 3A, 3B, and 3C are exemplary views of detection angle errors that occur in a target detecting apparatus based on radar according to an embodiment of the present disclosure;
FIGS. 4A and 4B are exemplary views that are referenced in describing an operation of storing first detection sensor information according to an embodiment of the present disclosure;
FIGS. 5A and 5B are exemplary views that are referenced in describing an operation of storing second detection sensor information according to an embodiment of the present disclosure;
FIGS. 6A, 6B, and 6C are exemplary views referenced in describing an operation of determining a false target according to an embodiment of the present disclosure;
FIGS. 7A and 7B are exemplary views illustrating an operation for verifying a false target detection performance according to an embodiment of the present disclosure; and
FIG. 8 is a view illustrating an operation flow for a target detecting method based on radar according to an embodiment of the present disclosure.

### DETAILED DESCRIPTION

Hereinafter, embodiments of the present disclosure will be described in detail with reference to the accompanying drawings. In adding reference numerals to the components of the drawings, it is noted that the same components are denoted by the same reference numerals even when they are drawn in different drawings. Furthermore, in describing the embodiments of the present disclosure, when it is determined that a detailed description of related known configurations and functions may hinder understanding of the embodiments of the present disclosure, a detailed description thereof will be omitted.

Furthermore, in describing the components of the embodiments of the present disclosure, terms, such as first, second, "A", "B", (a), and (b) may be used. The terms are simply for distinguishing the components, and the essence, the sequence, and the order of the corresponding components are not limited by the terms. Unless defined differently, all the terms including technical or scientific terms have the same meanings as those generally understood by an ordinary person in the art, to which the present disclosure pertains. The terms, such as the terms defined in dictionaries, which are generally used, should be construed to coincide with the context meanings of the related technologies, and are not construed as ideal or excessively formal meanings unless explicitly defined in the present disclosure.

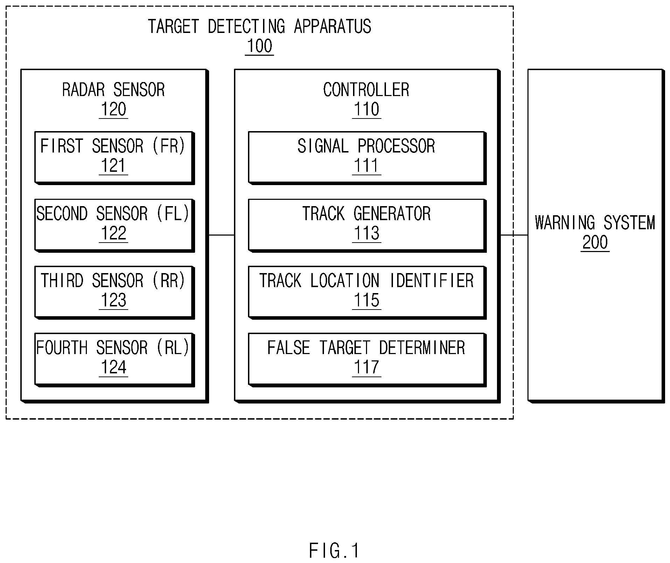

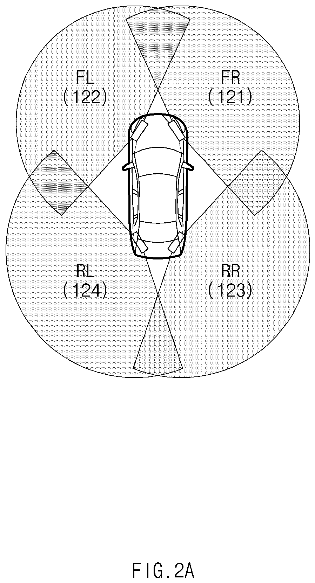

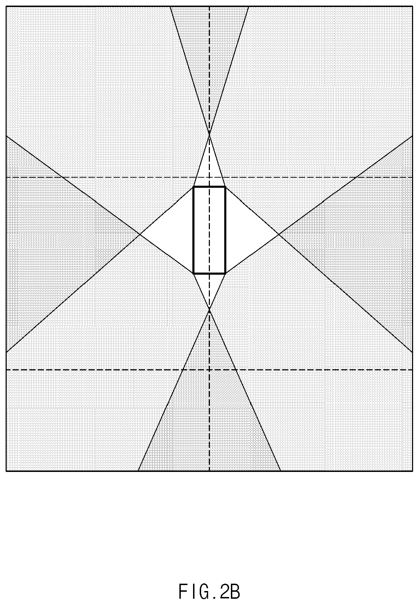

FIG. 1 is a view illustrating a configuration of a target detecting apparatus based on radar according to an embodiment of the present disclosure, and FIGS. 2A and 2B are views illustrating a detailed configuration and a detection area of a radar sensor according to an embodiment of the present disclosure.

First, referring to FIG. 1, a target detecting apparatus based on radar (hereinafter referred to as 'a target detecting apparatus') 100 according to an embodiment of the present disclosure may include a controller 110 and a radar sensor 120.

The radar sensor 120 may include a first sensor 121, a second sensor 122, a third sensor 123, and a fourth sensor 124.

As illustrated in FIGS. 2A and 2B, the first sensor 121, the second sensor 122, the third sensor 123, and the fourth sensor 124 may be installed at different locations in a vehicle, respectively, and the sensor may detect a target located around the vehicle by radiating radar signals in different directions outside the vehicle.

As an example, the first sensor 121 may be installed on a front right side FR of the vehicle and may detect a target that is located in a first detection area on the front right side of the vehicle.

The second sensor 122 may be installed on a front left side FL of the vehicle and may detect a target that is located in a second detection area in the front left side of the vehicle.

The third sensor 123 may be installed on a rear right side RR of the vehicle and may detect a target that is located in a third detection area in the rear right side of the vehicle.

The fourth sensor 124 is installed on a rear left side RL of the vehicle and may detect a target that is located in a fourth detection area in the rear left side of the vehicle.

Here, some areas of the first to fourth detection areas may overlap other detection areas. Detection results by the first to fourth sensors 121 to 124 may be illustrated as illustrated in FIG. 2B.

The controller 110 identifies a target location based on the detection results of the first to fourth sensors 121 to 124, and outputs the finally confirmed target location to a warning system 200 and the like to utilize it for assistance of driving. Then, the controller 110 determines whether the target detected by the first to fourth sensors 121 to 124 is a false target, and improves a detection accuracy of an actual target by excluding the target determined as a false target and improve a reliability of a driving assisting system.

The controller 110 may be implemented in a form of an independent hardware device including a memory and at least one processor that processes respective operations, and may be driven as a microprocessor or in a form that is included in another hardware device, such as a general-purpose computer system. The at least one processor may be implemented as an application specific integrated circuit (ASIC), a central processing unit (CPU), a microcontroller, and/or a microprocessor.

As illustrated in FIG. 1, the controller 110 may include a signal processor 111, a track generator 113, a track location identifier 115, and a false target determiner 117.

The signal processor 111 processes radar signals received from the first to fourth sensors 121 to 124 and identify at least one target detection information.

As an example, the signal processor 111 may calculate a detection angle of the target by using a direction of arrival (DOA) algorithm in a process of processing a radar signal.

Furthermore, the signal processor 111 may acquire peak information having a target range and a velocity value by performing a 2D fast Fourier transform (FFT) on the radar signal. Then, the signal processor 111 may acquire the detection angle of the target by performing an angle FFT on respective peak values in the DOA algorithm.

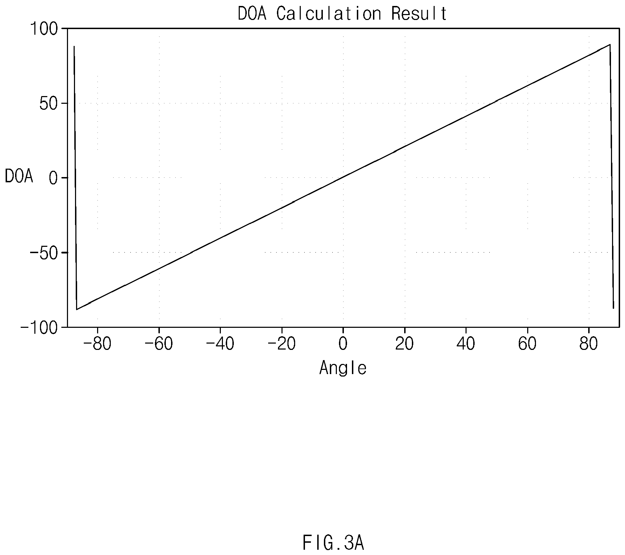

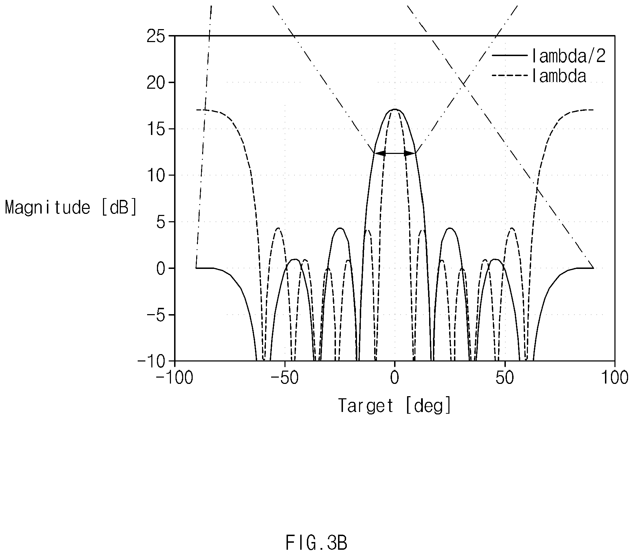

However, in the process of processing the radar signal in the signal processor 111, a detection angle error may occur, as illustrated in FIGS. 3A and 3B.

In other words, in the process of calculating the detection angle of a target by using the DOA algorithm, it is divided into a section, in which an angle accuracy is guaranteed, and a section, in which an angle ambiguity occurs, depending on an interval of radar channels. As illustrated in FIG. 3A, an angle accuracy is guaranteed in a -85 to +85 degree section of the detection area of the radar sensor 120, but in a section of the detection area of the radar sensor 120, which is less than -85 degrees, and a detection area that is more than +85 degrees, an angle ambiguity occurs.

As an example, in a +90 degree section, an angle ambiguity occurs whereby, in the process of the signal processor 111 processing the radar signal, a sign of the detection angle is calculated as an opposite sign, such as +90 degrees being calculated as -90 degrees.

Furthermore, when the signal processor 111 performs an angle FFT on respective peak values, it is performed through N angle FFT bins, and an angle -α to +α may be expressed in N bins. Then, as illustrated in FIG. 3B, a result of the angle FFT has characteristics of spreading in the X-axis direction (the angle FFT bin direction).

Accordingly, assuming that the signal processor 111 performs the angle FFT through 128 bins from -90 degrees to +90 degrees, a phenomenon, in which the result value of the 128th bin spreads in the X-axis direction and moves over to the first bin, may occur. This may cause an error, by which +90 degrees is incorrectly calculated as - 90 degrees.

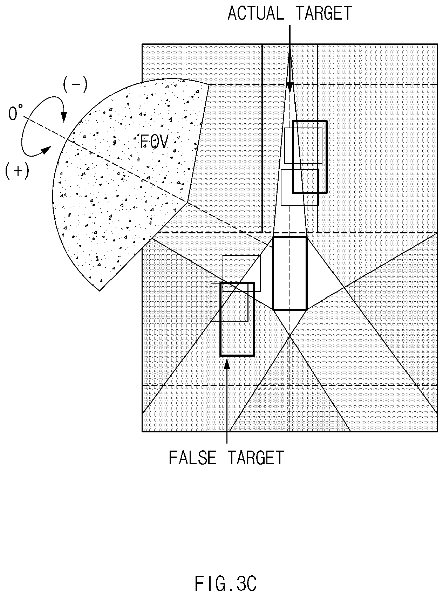

In this way, when an error in the detection angle of the target occurs in the process of processing the radar signal in the signal processor 111, the location of the target is incorrectly determined to be the location of a false target rather than the location of the actual target, as illustrated in FIG. 3C whereby not only a detection error but also a wrong warning for the false target are generated.

To prevent this, the controller 110 sets an area corresponding to a specific angle from the detection area of the first to fourth sensors 121 to 124 to the outer side, that is, a section, in which an angle ambiguity occurs, to an angle folding area. Accordingly, the false target determiner 117 determines whether the detected target is a false target for the target detected in the angle folding area to prevent a detection error and a wrong warning for the false target.

Then, the false target determiner 117 may determine the false target by comparing information stored by the track generator 113 and the track location identifier 115.

First, when at least one target detection information is acquired by the signal processor 111, the track generator 113 compares a correlation between the acquired target detection information, and generates an initial track based on the target information with a high correlation.

Then, when the initial track is generated, the track generator 113 stores information on the sensor that detected the initial track, that is, first detection sensor information. Here, in the first detection sensor information, detection information of the first to fourth sensors 121 to 124 for the initial track may be stored as a bit value of 0 or 1.

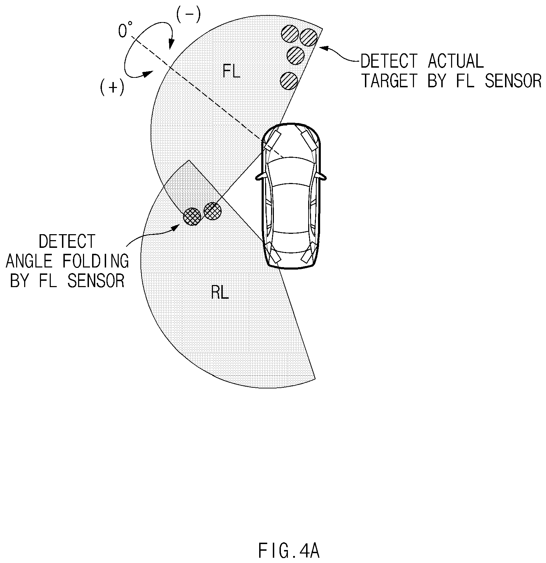

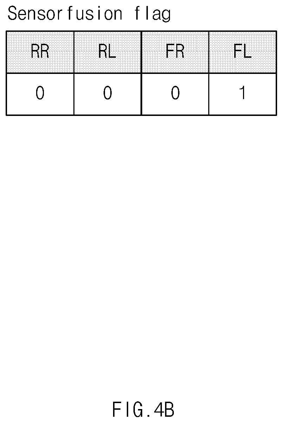

FIGS. 4A and 4B will be referenced for an embodiment of an operation for storing the first detection sensor information.

Referring to FIG. 4A, when the actual target is detected in the angle folding areas of the first sensor 121 and the second sensor 122, the track generator 113 generates an initial track "A" and the information on the first sensor 121 and the second sensor 122, in which the initial track "A" is detected as the target, is stored as the first detection sensor information. Then, the first detection sensor information may be stored in a sensor fusion flag.

As illustrated in FIG. 4B, the first detection sensor information may be stored as a bit value of 0 or 1 in the sensor fusion flag. That is, in the sensor fusion flag, `1' may be input to the bits of the first sensor 121 and the second sensor 122 that detected the initial track "A" as the target, and '0' may be input to the bits of the remaining sensors that did not detect the initial track "A" as the target and thus, '0011' (decimal number: 3) may be stored.

Meanwhile, as illustrated in FIG. 4A, when the actual target is detected in the (-) side angle folding area of the second detection area of the second sensor 122, it may be recognized that the target detection information is detected in the (+) side angle folding area that is an opposite sign of (+) of the second detection area due to a detection angle error in the angle folding area.

Accordingly, although the actual target was detected in the (-) side angle folding area of the second sensor 122, but the track generator 113 may generate an initial track "B" in the (+) side angle folding area of the second sensor 122.

In this case, because the sensor that detected the initial track "B" as the target is the second sensor 122, as illustrated in FIG. 4B, in the sensor fusion flag, "1" may be input to the bit corresponding to the second sensor 122 that detected the initial track "B" as the target and "0" may be input to the bit corresponding to the remaining sensors that did not detect the initial track "B" as the target, and '0001' (decimal number: 1) may be stored.

When the initial track is generated by the track generator 113, the track location identifier 115 identifies the location of the initial track. Then, the track location identifier 115 stores sensor information, in which the location coordinate of the initial track is included in in the detection area, that is, second detection sensor information. Here, in the second detection sensor information, the information of the sensor including the location coordinate of the initial track in each of the detection areas of the first to fourth sensors 121 to 124 may be stored as a bit value of 0 or 1.

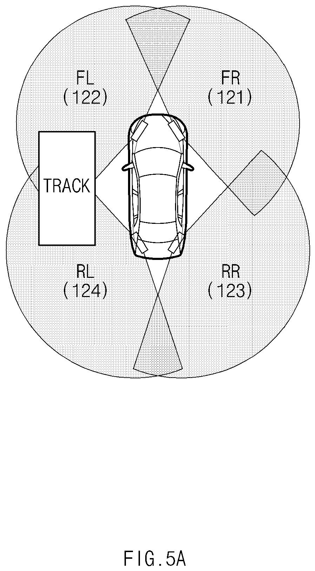

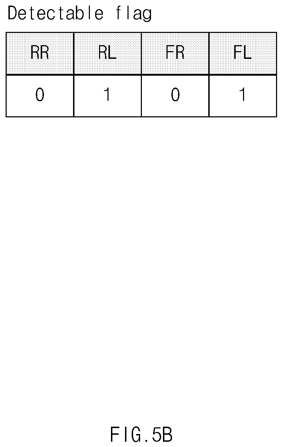

FIGS. 5A and 5B will be referenced for an embodiment of an operation of storing second detection sensor information.

Referring to FIG. 5A, it may be identified that the initial target is generated in an angle folding area, in which the detection areas of the second sensor 122 and the fourth sensor 124 overlap each other.

Accordingly, the track location identifier 115 stores sensor information including the location coordinate of the initial target in the detection area as the second detection sensor information. Then, the second detection sensor information may be stored in a detectable flag.

As illustrated in FIG. 5B, the second detection sensor information may be stored as a bit value of 0 or 1 in the detectable flag. That is, '1' may be stored in a bit corresponding to the sensor containing the location coordinate of the initial target in the detection area, and '0' may be stored in a bit corresponding to the remaining sensors.

In an embodiment of FIG. 5A, because the detection areas of the second sensor 122 and the fourth sensor 124 include the location coordinates of the initial target, as illustrated in FIG. 5B, in the detectable flag, `1' may be input to a bit corresponding to the second sensor 122 and the fourth sensor 124, and '0' may be input to a bit corresponding to the remaining first sensor 121 and third sensor 123, and thus a bit value of in 0101 (decimal number: 5) may be stored.

The false target determiner 117 determines whether the initial track is a false track when the location of the initial track generated by the track generator 113 is present in an angle folding area of at least one of the first to fourth sensors 121 to 124. When the location of the initial track is not present in the angle folding area, the false target determiner 117 may determine that the initial track is the actual target. In this case, the controller 110 generates (changes the state of) the initial track as a confirmed track. Then, information on the confirmed track may be output to the warning system 200 and the like to be utilized in the driving assisting system.

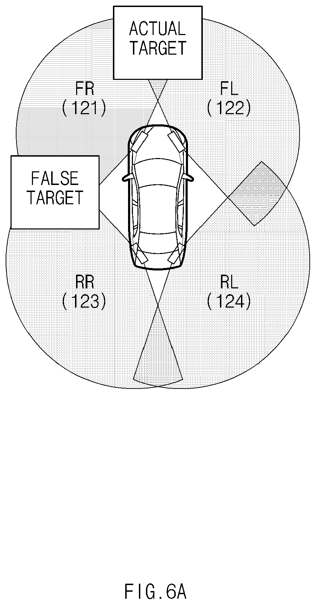

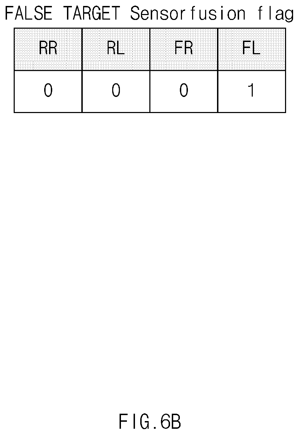

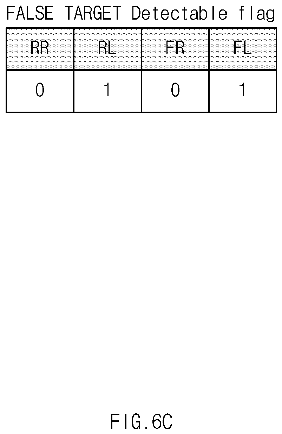

Meanwhile, the false target determiner 117 may compare the first detection sensor information stored by the track generator 113 and the second detection sensor information stored by the track location identifier 115 to determine whether the initial track is the false track when the location of the initial track is present in the angle folding area. FIGS. 6A, 6B, and 6C will be referenced for an operation of determining a false target.

When the initial track is the actual target, the first detection sensor information stored in a sensor fusion flag and the second detection sensor information stored in the detectable flag coincide with each other.

In other words, when the initial track is the actual target in FIG. 6A, the sensors that detected the initial track are the first sensor 121 and the second sensor 122, and the sensors including the location coordinate of the initial track in the detection area also are the first sensor 121 and the second sensor 122.

Accordingly, the false target determiner 117 determines the initial track as the actual target when the first detection sensor information and the second detection sensor information coincide with each other. In this case, the controller 110 generates (changes the state of) the initial track as a confirmed track. Then, information on the confirmed track may be output to the warning system 200 and the like to be utilized in the driving assisting system.

Meanwhile, in FIG. 6A, when the initial track is a false target, the first detection sensor information stored in the sensor fusion flag and the second detection sensor information stored in the Detectable flag do not coincide with each other.

In other words, because the actual target is located in an area, in which the detection areas of the first sensor 121 and the second sensor 122 overlap each other in FIG. 6A, the sensors that detected the actual target may be the first sensor 121 and the second sensor 122.

Meanwhile, because the false target is detected due to an angle folding error of the second sensor 122, it may be detected only by the second sensor. Accordingly, the first detection sensor information for the false target includes information on the second sensor 122 as '0001', as illustrated in FIG. 6B.

Meanwhile, because the initial track generated based on the false target is generated in an area, in which the detection areas of the second sensor 122 and the fourth sensor 124 overlap each other according to the information of the false target, the second detection sensor information for the sensor, in which the initial track is included in the detection area, as illustrated in FIG. 6C, includes information on the second sensor 122 and the fourth sensor 124 as '0101'. That is, since because no actual target is present in the detection area of the fourth sensor 124 included in the second detection sensor information, the first detection sensor information does not include information on the fourth sensor 124.

In this way, when an error occurs in the detection angle in the angle folding area, a false target is detected, and thus, the first detection sensor information and the second detection sensor information do not coincide with each other.

Accordingly, the false target determiner 117 determines the initial track as a false target when the first detection sensor information and the second detection sensor information do not coincide with each other. In this case, the controller 110 deletes the already generated initial track. In this way, the target detecting apparatus 100 according to an embodiment of the present disclosure may prevent the information of the false target from being utilized in the driving assisting system by deleting the information of the initial track identified as a false target.

Although not illustrated in FIG. 1, the target detecting apparatus 100 according to an embodiment of the present disclosure may further include a communication part and a storage.

The communication part may include a communication module for a vehicle network communication with electrical equipment and/or controllers provided in the vehicle. Here, the vehicle network communication technology may include a controller area network (CAN) communication, a local Interconnect network (LIN) communication, and Flex-Ray communication.

Furthermore, the communication part may include a communication module for wireless Internet access or a communication module for short range communication. Here, the wireless Internet technology may include Wireless LAN (WLAN), Wireless Broadband (Wibro), Wi-Fi, and World Interoperability for Microwave Access (Wimax (Wimax). Furthermore, the short-range communication technology may include Bluetooth, ZigBee, Ultra-Wideband (UWB), Radio Frequency Identification (RFID), and Infrared Data Association (IrDA).

The storage may store data, commands, and/or algorithms that are necessary for operating the target detecting apparatus 100 based on radar. Here, the storage may include a storage medium, such as a random access memory (RAM), a static random access memory (SRAM), a read only memory (ROM), a programmable read only memory (PROM), and an electrically erasable programmable read only memory (EEPROM).

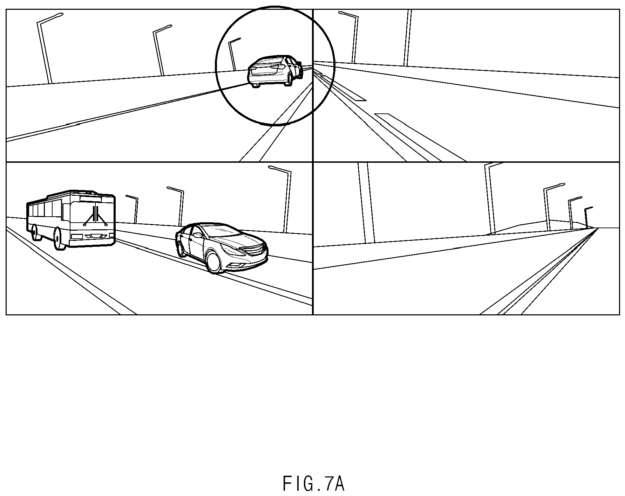

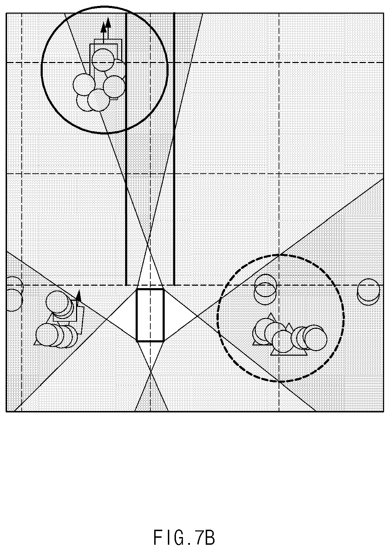

FIGS. 7A and 7B are exemplary views illustrating an operation of verifying a false target detection performance according to an embodiment of the present disclosure.

FIG. 7A illustrates actual target detection images of a front right side, a front left side, a rear right side, and a rear left side, and FIG. 7B illustrates target detection results and track generation information according to the present disclosure.

In relation to an actual target identified on the front left side in an actual target detection image illustrated in FIG. 7A, it also may be identified in FIG. 7B that a target detection (o), an initial track (△), and a confirmed track (□) were generated.

Meanwhile, no target was identified on the rear right side in the actual target detection image illustrated in FIG. 7A, whereas a false target was detected on the rear right side in FIG. 7B, and target detection (o) and the initial track (△) were generated. However, it may be identified that the target detecting apparatus 100 based on radar according to the present disclosure determines the initial track as a false target in FIG. 7B and does not generate a confirmed track (□).

In this way, when the initial track is identified as a false target, the information on the initial track is deleted, and thus the false track information is not utilized in the driving assisting system whereby a wrong warning may be prevented from occurring due to the false target. Accordingly, a tracking accuracy of the actual target may be improved, and a reliability of the driving assisting system also may be improved.

The operation flow of the target detecting apparatus based on radar according to the present disclosure configured as above will be described in more detail as follows.

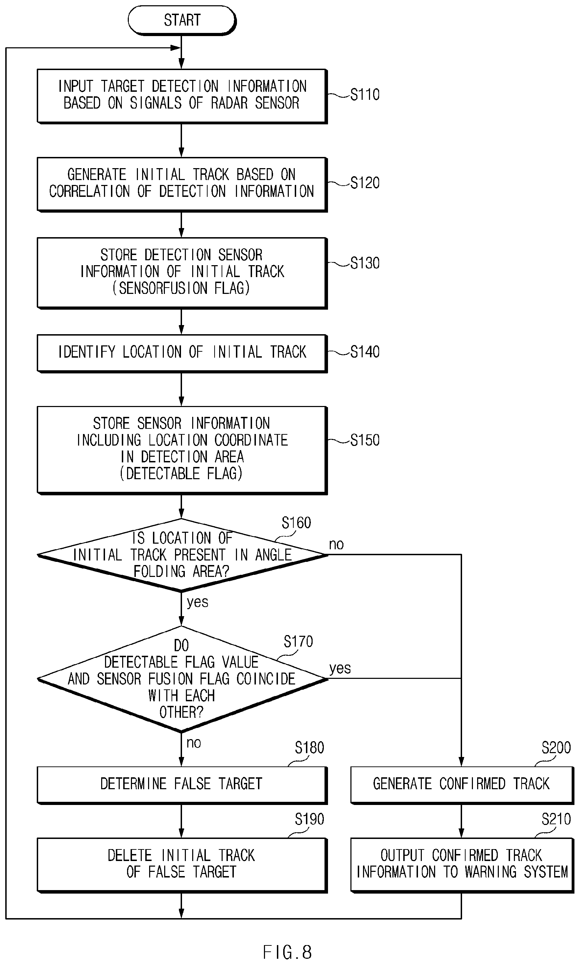

FIG. 8 is a view illustrating an operation flow for a target detecting method based on radar according to an embodiment of the present disclosure.

Referring to FIG. 8, the target detecting apparatus 100 according to an embodiment of the present disclosure generates the initial track based on a correlation between the target detection information (S120) when at least one target detection information acquired by processing a radar sensor signal is input (S110).

Then, the target detecting apparatus 100 stores information on the sensor that detected the initial track generated in process 'S120', that is, first detection sensor information, in the sensor fusion flag (S130).

Furthermore, the target detecting apparatus 100 identifies the location of the initial track generated in process 'S120' (S140), and stores the information of the sensor including the location coordinate of the initial track identified in process 'S140' in the detection areas of the first to fourth sensors 121 to 124, that is, the second detection sensor information in the detectable flag (S150).

Thereafter, the target detecting apparatus 100 identifies whether the location of the initial track identified in process 'S140' is present in the angle folding area that is preset for the detection area. When the location of the initial track does not present in the angle folding area (S160), the target detecting apparatus 100 may generate the confirmed track for the initial track (S200).

When it is identified that the location of the initial track is present in the angle folding area in process 'S160', the target detecting apparatus 100 compares the first detection sensor information stored in the sensor fusion flag in process 'S130' and the second detection sensor information stored in the detectable flag in the process 'S150'. As a result of the comparison, when the first detection sensor information and the second detection sensor information coincide with each other (S170), the target detecting apparatus 100 may generate a confirmed track for the initial track (S200). Then, the target detecting apparatus 100 may output the information on the confirmed track to the warning system 200 for use in the driving assisting system (S210).

Meanwhile, when it is identified that the first detection sensor information and the second detection sensor information do not coincide with each other in process `5170', the target detecting apparatus 100 determines the initial track as a false target (S180), and deletes the initial track corresponding to the false target (S190).

As described above, the target detecting apparatus based on radar and the target detecting method according to an embodiment of the present disclosure not only may determine a false target due to a detection angle error in some sections of the detection area of the radar, and also may delete the false target in the initial track generating operation to prevent a wrong warning due to the false target and improve the tracking accuracy of the actual target.

According to an embodiment of the present disclosure, a false target due to a detection angle error in some sections of a radar detection area may be determined.

In addition, according to an embodiment of the present disclosure, a wrong warning due to a false target is prevented by deleting the false target in an operation of generating an initial track, and a tracking accuracy of an actual target is improved.

## Claims

1. A target detecting apparatus based on radar, comprising:
a radar sensor configured to radiate radar signals in different directions from a vehicle to detect a target; and
a controller configured to generate an initial track based on target detection information from the radar sensor, and compare first detection sensor information obtained by detecting the initial track and second detection sensor information, in which a location coordinate of the initial track is included in a detection area of the radar sensor, to determine whether the initial track is a false target.

2. The target detecting apparatus of claim 1, wherein the radar sensor includes:
a first sensor configured to irradiate a radar signal toward a front right side of the vehicle to detect the target;
a second sensor configured to radiate a radar signal toward a front left side of the vehicle to detect the target;
a third sensor configured to irradiate a radar signal toward a rear right side of the vehicle to detect the target; and
a fourth sensor configured to irradiate a radar signal toward a rear left side of the vehicle to detect the target.

3. The target detecting apparatus of claim 2, wherein the controller includes:
a signal processor configured to generate one or more target detection information based on the radar signals of the first to fourth sensors;
a track generator configured to compare a correlation between the one or more target detection information, generate the initial track, and store the first detection sensor information obtained by detecting the initial track;
a track location identifier configured to identify a location of the initial track, and store the second detection sensor information, in which the location coordinate of the initial track is included in the detection area; and
a false target determiner configured to determine that the initial track is the false target when the first detection sensor information and the second detection sensor information do not coincide with each other after comparison with each other.

4. The target detecting apparatus of claim 3, wherein the controller is further configured to:
set areas corresponding to overlapping detection areas as angle folding areas set areas corresponding to overlapping detection areas as angle folding areas.

5. The target detecting apparatus of claim 4, wherein the false target determiner is configured to:
determine whether the initial track is the false target when the location coordinate of the initial track is included in at least one of the angle folding areas.

6. The target detecting apparatus of claim 4, or 5, wherein the track generator is further configured to:
generate a confirmed track for the initial track when the location coordinate of the initial track is not included in the angle folding areas.

7. The target detecting apparatus of claim 6, wherein the controller is further configured to:
output information on the confirmed track to a warning system in the vehicle when the confirmed track is generated.

8. The target detecting apparatus of any one of claims 3 to 7, wherein the controller is configured to:
delete the initial track when it is identified that the initial track is the false target.

9. The target detecting apparatus of any one of claims 3 to 8, wherein in the first detection sensor information,
detection information of the first to fourth sensors on the initial track is stored as a bit value of 0 or 1, and
in the second detection sensor information,
information on whether the location coordinate of the initial track is included in the detection areas of the first to fourth sensors is stored as a bit value of 0 or 1.

10. A target detecting method based on radar, comprising:
radiating, by a radar sensor, radar signals in different directions from a radar sensor of a vehicle to detect a target; and
generating, by a controller, an initial track based on target detection information from the radar sensor, and comparing, by the controller, first detection sensor information obtained by detecting the initial track and second detection sensor information, in which a location coordinate of the initial track is included a detection area, to determine whether the initial track is a false target.
